Europäisches Patentamt

European Patent Office

Office européen des brevets

(19)

(11) Veröffentlichungsnummer: **0 097 867**

**A2**

(12) # EUROPÄISCHE PATENTANMELDUNG

(21) Anmeldenummer: 83105808.6

(22) Anmeldetag: 14.06.83

(51) Int. Cl.³: **B 01 D 19/04**

(30) Priorität: 29.06.82 DE 3224135

(43) Veröffentlichungstag der Anmeldung:
11.01.84 Patentblatt 84/2

(84) Benannte Vertragsstaaten:
BE FR GB IT NL

(71) Anmelder: Th. Goldschmidt AG
Goldschmidtstrasse 100 Postfach 101461
D-4300 Essen 1(DE)

(72) Erfinder: Fink, Hans-Ferdi
Brassertstrasse 46
D-4300 Essen 1(DE)

(72) Erfinder: Patzke, Hans-Jürgen
Middelicherstrasse 260
D-4650 Gelsenkirchen-Resse(DE)

(72) Erfinder: Spieker, Fritz
Kirchhofsallee 28
D-4300 Essen 16(DE)

(72) Erfinder: Tölle, Franz-Josef
Tannhäuserweg 22
D-4330 Mülheim/Ruhr(DE)

(54) Pulverförmiger Entschäumer und Verfahren zu seiner Herstellung.

(57) Pulverförmiger Entschäumer, wobei das Entschäumeröl insbesondere flüssiges Organopolysiloxan von Carboxymethylcellulose oder deren Salzen enthält. Die pulverförmigen Entschäumer werden dadurch hergestellt, daß man eine wäßrige Lösung des Alkalisalzes der Carboxymethylcellulose mit einer wäßrigen Entschäumer/Öl-Emulsion vermischt und die Carboxymethylcellulose unter gleichzeitiger Destablisierung der Entschäumer/Öl-Emulsion ausfällt.

Die pulverförmigen Entschäumer können Waschmitteln, Zement- oder Betonmischungen oder anderen Systemen zugesetzt werden, bei denen verhindert werden soll, daß beim Vermischen mit Wasser Schaum gebildet wird. Die Entschäumungsmittel sind auch pharmazeutish verwendbar, da sie physiologisch unbedenklich sind.

Th. G o l d s c h m i d t  AG, Essen

Pulverförmiger Entschäumer und Verfahren zu seiner Herstellung

Die Erfindung betrifft einen pulverförmigen Entschäumer für wäßrige Systeme mit einem Gehalt an flüssigen Entschäumerölen sowie ein Verfahren zur Herstellung eines solchen Entschäumers.

Pulverförmige Entschäumer werden entsprechend dem Stand der Technik insbesondere Waschmitteln zugesetzt, um das unerwünschte starke Schäumen von Waschmitteln zu unterdrücken.

Es gibt zahlreiche Vorschläge, dem Waschmittelslurry ein Entschäumeröl, in der Regel Siliconöl, zuzusetzen, so daß bei der anschließenden Sprühtrocknung das Siliconentschäumeröl auf den festen Bestandteilen des Waschmittels fein verteilt ist. Es hat sich jedoch herausgestellt, daß das Siliconöl ein hohes Spreitungsvermögen aufweist und deshalb eine möglichst große Oberfläche zu bedecken sucht. Löst man ein solches Waschmittel in Wasser auf, wird das Siliconöl in der Waschflotte äußerst fein verteilt und verliert durch diese Feinverteilung einen Teil seiner Wirksamkeit. Andererseits wandert das Siliconöl auch in die Verpackungsmaterialien ab, so daß auf den Gebinden, die meist aus Karton bestehen, bei der Lagerung ölige Flecken auftreten können und das verpackte Gut unansehnlich machen.

Man hat deshalb nach Wegen gesucht, das entschäumende Mittel im Waschmittel so zu verteilen, daß die Wanderung des Siliconöls verringert wird und diese negativen Effekte nicht eintreten. Hierzu gibt es einen umfangreichen Stand der Technik, aus dem die folgenden Druckschriften als charakteristisch ausgewählt sind:

Aus der DE-OS 29 29 359 ist ein Verfahren zur Herstellung eines schaumgedämpften Waschmittels, bestehend aus mehreren pulverförmigen bis körnigen Komponenten, wobei eine der Pulverkomponenten aus einem an einer Trägersubstanz adsorbierten Polysiloxanentschäumer besteht und wobei die übrigen Pulverkomponenten aus sprühgetrockneten, beziehungsweise granulierten Waschmitteln üblicher Zusammensetzung und gegebenenfalls Bleichmitteln besteht, bekannt. Es ist dadurch gekennzeichnet, daß man zur Herstellung der den Polysiloxan-Entschäumer enthaltenden Pulverkomponente eine 40 bis 75 Gew.-% (als wasserfreie Verbindung gerechnet) mindestens einer Verbindung aus der Klasse der Polymerphosphate, Silikate, Carbonate und Sulfate des Natriums enthaltende wäßrige Aufschlämmung, die frei von Tensiden ist und nicht mehr als 0,3 %, bezogen auf wasserfreies Salz, an Polysiloxan-Entschäumer enthält, unter Anwendung von 120° bis 300°C heißer Gase in an sich bekannter Weise sprühtrocknet und das so erhaltene körnige 80 bis 95 Gew.-% an wasserfreien Salzen enthaltende Sprühprodukt mit 3 bis 10 Gew.-%, bezogen auf wasserfreies Salz, an Polysiloxan-Entschäumer behandelt, das aus einem flüssigen Gemisch aus Polysiloxan und feinteiliger Kieselsäure im Gewichtsverhältnis 50 : 1 bis 5 : 1 besteht, worauf man das so erhaltene körnige Adsorbat in an sich bekannter Weise mit den weiteren Pulverkomponenten in solchen Gewichtsverhältnissen mischt, daß der Gehalt des Waschmittels an kieselsäurehaltigem Polysiloxan- . Entschäumer 0,01 bis 0,5 Gew.-% beträgt.

Dieses Verfahren ist verhältnismäßig aufwendig, da man zuerst die builder oder einen Teil derselben mit einem Teil des Polysiloxan-Entschäumers zum Erhalt eines Pulvers sprühtrocknen muß, in dem der Siliconentschäumer enthalten ist und anschließend das Sprühprodukt erneut mit einem Polysiloxan-Entschäumer behandeln muß, und das so erhaltene Vorprodukt dann mit den weiteren Pulverkomponenten zu vermischen ist. Es wird zwar nach den Angaben der Offenlegungsschrift ein Salzgemisch erhalten, welches besonders abriebfest und gut löslich sein soll. Der vor dem Versprühen zugesetzte Anteil verliert jedoch einen gewissen Teil seiner schaumdämpfenden Wirkung, was in Kauf genommen werden muß. Eine Wanderung des auf dem Adsorbat befindlichen Siliconöls wird jedoch nicht mit Sicherheit vermieden, so daß dieser Vorschlag nicht voll befriedigen kann.

Gegenstand der europäischen Patentanmeldung 0 036 162 ist ein phosphatarmes, schaumreguliertes Waschmittel, welches 0,5 bis 10 Gew.-% bestehend aus einer körnigen Trägersubstanz aus der Gruppe der Polymerphosphate, Silikate, Carbonate und Sulfate des Natriums und einem
darin adsorbierten kieselsäurehaltigen Polysiloxan-Entschäumer enthält,
der vorzugsweise aus 0,01 bis 0,5 Gew.-% eines Gemisches aus feinteiliger Kieselsäure und Polysiloxan, besonders eines Gemisches aus Polydimethylsiloxan und silanierter Kieselsäure besteht. Jedoch ist auch
diesem Vorschlag der Nachteil eigen, daß sich das Entschäumungsmittel
auf der Oberfläche des Adsorbens befindet, so daß bei langer Lagerung
Spreitungseffekte des Siliconöls nicht mit Sicherheit vermieden werden
können.

In der europäischen Patentanmeldung 0 040 091 werden kompliziert aufgebaute Mikrogranulate beschrieben, bei denen man zunächst sphärische
oder zylindrische Hohlkugeln, z.B. aus Sucrose, herstellt und diese
Granulate mit einem Adsorbens imprägniert, welches z.B. aus siliconimprägniertem Titandioxid besteht und die so erhaltenen Produkte dann
mit Wachs überzieht. Hierbei kann man zwar davon ausgehen, daß eine
Wanderung des Siliconöls vermieden wird, jedoch ist die Herstellung
eines solchen Produktes aufwendig und daher nicht zu empfehlen.

Der vorliegenden Erfindung liegt die Aufgabe zugrunde, einen pulverförmigen Entschäumer auf einfache und wirtschaftliche Weise zu erhalten,
bei dem die Gesamtmenge des Entschäumeröls im Innern des Pulvers enthalten ist und bei dem die Gerüstsubstanz des Pulvers ein üblicher
Bestandteil eines Waschmittels ist und darüber hinaus aber auch universell zu Entschäumungen wäßriger Systeme dienen kann, welche keine
waschaktiven Eigenschaften haben. Einsatzmöglichkeiten für feste
pulverförmige Entschäumersubstanzen gibt es z.B. bei Zement- oder
Betonmischungen, bei denen nach Zusatz des zur Abbindung und zur Verarbeitung des Zements oder Betons benötigten Wassers zwecks Erhöhung
der Festigkeitseigenschaften eine Schaumbildung vermieden werden soll.
Weitere Einsatzmöglichkeiten bieten sich bei der Herstellung wäßriger
Klebstoffe, wie sie z.B. bei der Verklebung von Tapeten benötigt werden. Weitere Anwendungsgebiete erschließen sich z.B. in der Galenik,
wobei man bisher Silicone, die die Schaumbildung im Magen- und Darmtrakt verhindern sollen, in Form von Gelatinekapseln bereitet hat. Der pulverförmige Entschäumer soll deshalb möglichst auch pharmakologisch unbedenklich sein. Weitere Anwendungsgebiete sind dem Fachmann bekannt, ohne daß hierauf in Form einer vollständigen Aufzählung eingegangen werden soll.

Diese Anforderungen werden überraschenderweise im Rahmen vorliegender Erfindung von einem pulverförmigen Entschäumer erfüllt, welcher dadurch gekennzeichnet ist, daß das Entschäumeröl von Carboxymethylcellulose oder deren Salzen umhüllt ist.

Dabei beschränkt sich die Erfindung nicht auf pulverförmige Entschäumer, welche als Entschäumeröl ein flüssiges Organopolysiloxan enthalten, wenn auch diese bevorzugt sind. Man kann auch andere, entschäumend wirkende ölige Substanzen, wie z.B. Mineralöle, insbesondere solche niedriger Viskosität, sowie pflanzliche oder tierische Öle, wie z.B. Rüböl, Sojaöl oder Tranöle verwenden.

Unter dem Begriff der flüssigen Organopolysiloxane sind zunächst die handelsüblichen Alkylpolysiloxane, insbesondere Methylpolysiloxane, zu verstehen. Die Viskosität derartiger Siliconöle liegt in der Regel in einem Bereich von 50 bis 100.000 mPa·s. Jedoch werden unter dem Begriff der flüssigen Organopolysiloxane auch die als Entschäumer bekannten Polyoxyalkylen-Polysiloxan-Blockmischpolymerisate verstanden, bei denen entweder der Polysiloxanblock und/oder ein Gehalt an Oxypropyleneinheiten im Polyoxyalkylenblock für den erwünschten Grad an Wasserunlöslichkeit sorgen. Man kann auch substituierte Polysiloxane, wie z.B. mit längerkettigen Alkylresten substituierte Alkylpolysiloxane, verwenden, wobei z.B. 5 bis 10 oder mehr Prozent der Methylgruppen durch Alkylgruppen mit 8 bis 18 Kohlenstoffatomen ersetzt sind. Ein Teil der Alkylgruppen kann auch durch Phenylgruppen ersetzt sein. Günstige schaumzerstörende Wirkungen haben auch solche Polysiloxane, welche Substituenten aufweisen, bei denen die an das Siliciumatom gebundenen Alkylreste Fluoratome aufweisen. Die schaumzerstörende oder schaumverhindernde Wirkung der Polysiloxane kann in an sich bekannter Weise durch Zusatz von feinverteilter, gegebenenfalls hydrophobierter Kieselsäure verbessert werden.

Als Carboxymethylcellulose werden vorzugsweise solche Typen verwendet, deren Alkalisalze in 3 %iger wäßriger Lösung bei 20°C eine Viskosität von 1000 bis 5000 mPa·s aufweisen. Es ist dem Fachmann klar, daß bei der Verwendung der erfindungsgemäßen pulverförmigen Entschäumer in der Pharmazie Carboxymethylcellulose eingesetzt wird, die die Reinheitskriterien für pharmazeutische Anwendungen erfüllt. Das Mengenverhältnis von Entschäumeröl : Carboxymethylcellulose beträgt im allgemeinen 1 : 0,2 bis 1 : 1, insbesondere 1 : 0,3 bis 1 : 0,4.

Ein weiterer Gegenstand vorliegender Erfindung ist ein Verfahren zur Herstellung solcher Entschäumer. Das erfindungsgemäße Verfahren ist dabei dadurch gekennzeichnet, daß man einer wäßrigen Emulsion des Entschäumeröls eine wäßrige Lösung des Alkalisalzes der Carboxymethylcellulose in solchen Mengen zusetzt, daß einem Gew.-Teil Entschäumeröl 0,2 bis 1 Gew.-Teile Carboxymethylcellulose entsprechen, und dieser Zubereitung ein die Carboxymethylcellulose ausfällendes und die Entschäumerölemulsion destabilisierendes Mittel zusetzt und das ausgefällte Produkt von der überstehenden Lösung abtrennt.

Besonders bevorzugt ist dabei ein Verfahren mit dem Kennzeichen, daß man einer wäßrigen Emulsion des Entschäumeröls eine wäßrige Lösung des Alkalisalzes der Carboxymethylcellulose in solchen Mengen zusetzt, daß einem Gew.-Teil Entschäumeröl 0,3 bis 0,4 Gew.-Teile Carboxymethylcellulose entsprechen.

Hieraus ergibt sich, daß bei einer solchen Verfahrensweise einem Gew.-Teil Entschäumeröl 0,2 bis 1 Gew.-Teile Carboxymethylcellulose, vorzugsweise 0,3 bis 0,4 Gew.-Teile Carboxymethylcellulose, entsprechen. Das Verhältnis von entschäumeraktiver Verbindung zu umhüllender Verbindung ist somit besonders günstig.

Bei der Durchführung des erfindungsgemäßen Verfahrens verwendet man zweckmäßig möglichst konzentrierte Lösungen der Carboxymethylcellulose, wobei durch die Viskosität der wäßrigen Lösung der Konzentration Grenzen gesetzt sind. Die Lösung muß rührfähig bleiben, so daß man im allgemeinen 3- bis 6 %ige wäßrige Lösungen der Carboxymethylcellulose verwendet.

Als Entschäumeremulsionen setzt man ebenfalls insbesondere höher konzentrierte Emulsionen vom Typ Öl-in-Wasser ein. Bevorzugt sind Emulsionen, welche 30 bis 50 Gew.-% Öl als innere Phase enthalten. Die Entschäumeremulsionen werden in dem Fachmann bekannter Weise hergestellt, wobei man die an sich bekannten Emulgatoren, wie nichtionogene Emulgatoren, die durch Anlagerung von Ethylenoxid an Verbindungen mit acidem Wasserstoff hergestellt worden sind, verwenden kann. Beispiele solcher Emulgatoren sind Anlagerungsprodukte von Ethylenoxid an Fettalkohole mit 8 bis 18 Kohlenstoffatomen, ferner Anlagerungsprodukte des Ethylenoxids an Alkohole der Oxosynthese. Man kann diese nichtionogenen Emulgatoren auch in Verbindung mit anionaktiven Emulgatoren, wie z.B. Salzen von Fettsäuren oder von Alkylbenzolsulfonsäuren, wie z.B. Dodecylsulfonsäuren, verwenden. Die Mitverwendung derartiger anionaktiver Emulgatoren wirkt sich besonders günstig aus, wenn, wie weiter unten beschrieben, die Destabilisierung der Emulsionen und die Ausfällung der Carboxymethylcellulose durch mehrwertige Salze erfolgt.

Dem Fachmann ist bekannt, durch welche Methoden man aus einer wäßrigen Lösung der Carboxymethylcellulose diese ausfällen kann. Dies kann insbesondere entweder dadurch geschehen, daß man das lösliche Alkalisalz der Carboxymethylcellulose in ein unlösliches Salz derselben überführt. Hierfür eignen sich insbesondere Aluminiumsalze, wie z.B. Aluminiumsulfat oder Aluminiumacetat. Diese Salze haben den Vorteil, daß sie gleichzeitig besonders geeignet sind, die Entschäumer/Öl-Emulsion zu destabilisieren. Diese Eigenschaften teilen die Aluminiumsalze mit vielen anderen mehrwertigen Kationen. Die Verwendung wäßriger Lösung von Aluminiumsalzen als Fäll- und Destabilisierungsmittel ist deshalb besonders bevorzugt und bietet Gewähr, daß die Ausfällung der Carboxymethylcellulose und die Destabilisierung der Entschäumeremulsion gleichzeitig ablaufen.

Setzt man einen auf diese Art erhaltenen erfindungsgemäßen Entschäumer einer Waschflotte oder einer anderen basisch reagierenden wäßrigen Aufschlämmung, wie z.B. Zement, zu, wird die ausgefällte Carboxymethylcellulose wieder in Lösung gebracht. Das gleiche geschieht auch in stark sauren Lösungen, z.B. durch die Magensäure.

Will man jedoch verhindern, daß die Ausfällung der Carboxymethylcellulose und die Destabilisierung der Entschäumer/Öl-Emulsion durch Salzzusatz erfolgt, kann man den gleichen Effekt auch durch Zusatz eines wasserlöslichen Alkohols, insbesondere durch Zusatz von Ethanol, bewirken. Aus Gründen der Wirtschaftlichkeit empfiehlt es sich, aus der von dem ausgefällten pulverförmigen Entschäumer abgetrennten Lösung zur Rückgewinnung des Alkohols und zur Führung des Alkohols im Kreislauf, diesen durch Destillation wieder zu gewinnen.

Das nach dem erfindungsgemäßen Verfahren hergestellte Produkt ist pulverförmig und rieselfähig. Breitet man das Produkt auf einer saugfähigen Unterlage aus, ist kein Übertritt des Entschäumeröls in die saugfähige Unterlage festzustellen. Das Pulver kann deshalb leicht dosiert und zugemischt werden.

Es hat sich gezeigt, daß die schaumverhindernde Wirkung der erfindungsgemäßen Entschäumer in Waschmittelmischungen auch nach langer Lagerzeit selbst bei erhöhter Temperatur erhalten bleibt.

In den folgenden Beispielen wird die erfindungsgemäße Herstellung der pulverförmigen Entschäumer noch näher erläutert, und es werden die Eigenschaften dieser Produkte in anwendungstechnischen Versuchen gezeigt.

## Beispiel 1

In ein Rührgefäß werden 400 Gew.-Teile eines Siliconentschäumeröls, welches aus einem Gemisch aus 90 Gew.-% eines Dimethylpolysiloxans mit einer Viskosität von 20000 mPa·s und 10 Gew.-% einer hochdispersen Kieselsäure mit einer BET-Oberfläche von 200 $m^2/g^{-1}$ besteht, eingefüllt. Danach gibt man 50 Gew.-Teile eines Fettalkoholpolyglycolethers mit einem HLB-Wert von 10,6 und 50 Gew.-Teile eines ethoxilierten natürlichen Triglycerids mit einem HLB-Wert von 18 hinzu. Der Gefäßinhalt wird auf 70°C erwärmt, um die Emulgatoren aufzuschmelzen. Hiernach wird mit einem Turbinenrührer so lange mit einer Umfangsgeschwindigkeit von 5,5 $ms^{-1}$ gerührt, bis eine homogene Mischung erreicht ist. Unter gleichen Rührbedingungen werden nunmehr 500 Gew.-Teile Wasser eingearbeitet. Die resultierende Emulsion wird anschließend durch einmaliges Passieren einer Hochdruck-Emulgiermaschine Typ Manton-Gaulin bei 100 bar homogenisiert. Diese Siliconentschäumeremulsion enthält 40 Gew.-% Siliconentschäumeröl.

400 Gew.-Teile der so hergestellten Emulsion werden in einem Rührgefäß mit Hilfe eines scherkraftarmen Rührers mit 2000 Gew.-Teilen einer Lösung, welche 108 Gew.-Teile einer Carboxymethylcellulose mit einem Aktivstoffgehalt von 54,0 Gew.-% enthält und deren 3 %ige Lösung in Wasser eine Viskosität von 1400 mPa·s aufweist, vermischt. Diese Mischung enthält 160 Gew.-Teile Siliconentschäumeröl und 72,2 Gew.-Teile Natriumsalz der Carboxymethylcellulose. In das Gemisch trägt man unter Rühren 1000 Gew.-Teile einer 10 Gew.-% $Al_2(SO_4)_3 \cdot 18H_2O$ enthaltenden wäßrigen Lösung ein. Es entsteht spontan ein weißer, körniger Niederschlag. Nach Abstellen des Rührers wird der Niederschlag abfiltriert und zur Entfernung anhaftender, aus der Siliconentschäumeremulsion stammender Emulgatorreste sowie von der Carboxymethylcellulose stammender Salze mit Wasser gewaschen. Man erhält 862 Gew.-Teile Filterrückstand, der im wesentlichen 160 Gew.-Teile Siliconentschäumeröl, 55 Gew.-Teile Aluminiumsalz der Carboxymethylcellulose und 647 Gew.-Teile Wasser enthält.

Nach dem Trocknen im Vakuum verbleibt ein rieselfähiges, körniges Pulver mit einem Siliconentschäumergehalt von 74,4 Gew.-%.

Zur Prüfung der Wirksamkeit des Entschäumers wird in folgender Weise verfahren: In einem Trommelmischer werden 75 Gew.-Teile eines pulverförmigen Gemisches aus

|  |  |
|---|---|
| 8,0 Gew.-Teilen | Na-Dodecylbenzolsulfonat |
| 2,5 Gew.-Teilen | Lutensol AT 11 |
| 2,5 Gew.-Teilen | Lutensol ON 7 |
| 50,0 Gew.-Teilen | Natriumtripolyphosphat |
| 5,0 Gew.-Teilen | Natriumsilikat |
| 1,0 Gew.-Teil | Carboxymethylcellulose |
| 20,0 Gew.-Teilen | Natriumsulfat |
| 2,0 Gew.-Teilen | Talgseife |
| 9,0 Gew.-Teilen | Wasser |

mit 24,03 Gew.-Teilen Natriumperborat und 0,070 Gew.-Teilen des erfindungsgemäßen pulverförmigen Entschäumers vermischt. Die fertige Mischung enthält demnach 0,052 Gew.-% Siliconentschäumeröl.

Das homogene Entschäumer enthaltende Waschpulver wird unmittelbar nach der Herstellung und nach mehrmonatiger Lagerung bei Raumtemperatur und bei 50°C in einer Trommelwaschmaschine überprüft. Hierzu wird die Maschine mit 3,5 kg sauberem Baumwollgewebe gefüllt. Dann werden 125 g des zu prüfenden Waschpulvers in den Einfüllstutzen gebracht und mit kaltem Leitungswasser (12,5 l) von 8° dH in die Maschine eingespeist. Die Schaumbildung wird während des ablaufenden Waschprogramms bei 30°C, 60°C und 95°C beobachtet. Es wird die Schaumhöhe an der Frontscheibe der Waschmaschine gemessen und wie folgt benotet:

| | | |
|---|---|---|
| kein Schaum | = | 0 |
| 1/4 der Frontglashöhe | = | 1 |
| 1/2 der Frontglashöhe | = | 2 |
| 3/4 der Frontglashöhe | = | 3 |
| 4/4 der Frontglashöhe | = | 4 |
| Schaum im Einfüllstutzen | = | 5 |
| Überschäumen | = | 6 |

In der folgenden Tabelle 1 sind die Prüfergebnisse zusammengestellt.

Tabelle 1

| | | Ausprüfung nach Lagerung | | Schaumnote | | |
|---|---|---|---|---|---|---|
| | Tage | Temperatur | | 30°C | 60°C | 95°C |
| a | 1 | Raumtemperatur | | 0 | 0,5 | 0,5 |
| b | 30 | Raumtemperatur | | 0 | 0,5 | 0,5 |
| c | 150 | Raumtemperatur | | 0 | 0,5 | 0,5 |
| d | 10 | 50°C | | 0 | 0,5 | 0,5 |
| e | 30 | 50°C | | 0 | 0,5 | 0,5 |
| f | 60 | 50°C | | 0 | 0,5 | 0,5 |

### Beispiel 2

#### (Vergleichsbeispiel)

In einem Trommelmischer werden 100 Gew.-Teile der in Beispiel 1 beschriebenen Carboxymethylcellulose vorgelegt und mit 100 Gew.-Teilen einer Lösung, bestehend aus gleichen Gew.-Teilen des in Beispiel 1 beschriebenen Siliconentschäumeröls und Methylenchlorid, vermischt. Nach dem Abdampfen des Lösungsmittels erhält man ein rieselfähiges Pulver, welches 33 Gew.-% Siliconentschäumeröl enthält. Dieses Pulver wird in die in Beispiel 1 beschriebene Waschpulvermischung eingearbeitet, und zwar in einer solchen Menge, daß die fertige Mischung ebenfalls 0,052 Gew.-% Siliconentschäumeröl enthält. Die Prüfergebnisse an frisch mit dem nichterfindungsgemäßen Entschäumerpulver hergestellten Waschpulver sowie an bei Raumtemperatur und bei 50°C gelagerten Mischungen sind in Tabelle 2 zusammengefaßt.

Tabelle 2

| | Ausprüfung nach Lagerung | | Schaumnote | | |
|---|---|---|---|---|---|
| | Tage | Temperatur | 30°C | 60°C | 95°C |
| 2a | 1 | Raumtemperatur | 1,5 | 1,0 | 0,5 |
| 2b | 30 | Raumtemperatur | 2,0 | 2,5 | 4,0 |
| 2c | 1 | 50°C | 1,5 | 1,5 | 0,5 |
| 2d | 10 | 50°C | 2,5 | 3,5 | 4,0 |

Die Tabelle zeigt, daß der nichterfindungsgemäße Entschäumer nicht nur weniger wirksam ist, sondern auch bei Lagerung des fertigen Waschpulvers an Wirksamkeit verliert.

### Beipiel 3

Die in Beispiel 1 beschriebene Mischung, bestehend aus 400 g der 40 gew.-%igen Siliconentschäumeremulsion und 2000 Gew.-Teilen der 108 Gew.-Teile der im Beispiel 1 beschriebenen Carboxymethylcellulose enthaltenden wäßrigen Lösung, wurde unter kräftigem Rühren in 6704 Gew.-Teile Ethylalkohol (96 gew.-%ig) eingetragen. Es entsteht ein feinkörniger Niederschlag, der sich nach Abstellen des Rührers sehr rasch absetzt. Nach Abdekantieren der überstehenden klaren Lösung wird der Niederschlag abfiltriert, zweimal mit je 50 Gew.-Teilen Ethanol gewaschen und anschließend im Vakuum getrocknet. Man erhält 214 Gew.-Teile eines feinkörnigen, rieselfähigen Pulvers mit einem Siliconentschäumergehalt von 74,4 Gew.-%.

Die Prüfung auf Wirksamkeit erfolgte in der im Beispiel 1 beschriebenen Weise. Die Ergebnisse sind in Tabelle 3 zusammengestellt.

Tabelle 3

| Ausprüfung nach Lagerung | | Schaumnote | | |
|---|---|---|---|---|
| Tage | Temperatur | 30°C | 60°C | 95°C |
| 3a | 1 | Raumtemperatur | <0,5 | <0,5 | <0,5 |
| 3b | 60 | Raumtemperatur | <0,5 | 0,5 | 0,5 |
| 3c | 1 | 50°C | <0,5 | <0,5 | <0,5 |
| 3d | 10 | 50°C | 0,5 | 0,5 | 0,5 |
| 3e | 30 | 50°C | 0,5 | 0,5 | 0,5 |

- 1 -

0097867

Patentansprüche:

1. Pulverförmiger Entschäumer für wäßrige Systeme mit einem Gehalt an flüssigen Entschäumerölen, dadurch gekennzeichnet, daß das Entschäumeröl von Carboxymethylcellulose oder deren Salzen umhüllt ist.

2. Pulverförmiges Entschäumermittel nach Anspruch 1, dadurch gekennzeichnet, daß das Entschäumeröl ein flüssiges Organopolysiloxan ist.

3. Verfahren zur Herstellung eines pulverförmigen Entschäumers nach Anspruch 1 oder 2, dadurch gekennzeichnet, daß man einer wäßrigen Emulsion des Entschäumeröls eine wäßrige Lösung des Alkalisalzes der Carboxymethylcellulose in solchen Mengen zusetzt, daß einem Gew.-Teil Entschäumeröl 0,2 bis 1 Gew.-Teile Carboxymethylcellulose entsprechen, und dieser Zubereitung ein die Carboxymethylcellulose ausfällendes und die Entschäumerölemulsion destabilisierendes Mittel zusetzt und das ausgefällte Produkt von der überstehenden Lösung abtrennt.

4. Verfahren nach Anspruch 3, dadurch gekennzeichnet, daß man einer wäßrigen Emulsion des Entschäumeröls eine wäßrige Lösung des Alkalisalzes der Carboxymethylcellulose in solchen Mengen zusetzt, daß einem Gew.-Teil Entschäumeröl 0,3 bis 0,4 Gew.-Teile Carboxymethylcellulose entsprechen.

5. Verfahren nach Anspruch 3 oder 4, dadurch gekennzeichnet, daß man als Fäll- und Destabilisierungsmittel eine wäßrige Lösung von Aluminiumsalzen verwendet.

6. Verfahren nach Anspruch 3 oder 4, dadurch gekennzeichnet, daß man als Fäll- und Destabilisierungsmittel einen wasserlöslichen Alkohol verwendet.

7. Verfahren nach Anspruch 6, dadurch gekennzeichnet, daß man als wasserlöslichen Alkohol Ethanol verwendet.

**0097867**

8. Verfahren nach einem oder mehreren der Ansprüche 3 bis 7, dadurch gekennzeichnet, daß man eine Carboxymethylcellulose verwendet, deren Alkalisalz in 3 %iger wäßriger Lösung bei 20°C eine Viskosität von 1000 bis 5000 mPa·s aufweist.